# EUROPEAN PATENT APPLICATION

(11) **EP 2 927 279 A1**
(43) Date of publication of application: **07.10.2015**
(21) Application number: 13858181.4
(22) Date of filing: 25.11.2013
(51) Int. Cl.: C08L 67/02, C08K 5/16, C08K 5/5313, C08K 5/5399

(54) **FLAME-RETARDANT POLYBUTYLENE TEREPHTHALATE RESIN COMPOSITION, AND MOLDED PRODUCT THEREOF**

(30) Priority: 28.11.2012 JP 2012259599
(71) Applicant: Wintech Polymer Ltd., Minato-ku Tokyo 108-8280 (JP)
(72) Inventor: SUEYASU, Nobuyuki, Fuji-shi Shizuoka 416-8533 (JP)
(74) Representative: Maiwald Patentanwalts GmbH
(86) International application number: PCT/JP2013/081606
(87) International publication number: WO 2014/084157

(57) **Abstract**

Provided are: a flame-retardant polybutylene terephthalate resin composition which exhibits excellent flame retardance, glow-wire properties (GWIT), tracking resistance and bleed resistance in spite of a fact that a polybutylene terephthalate resin is used as a sole resin component; and a molded product of the resin composition. A flame-retardant polybutylene telephthalate resin composition containing (A) a polybutylene telephthalate resin, (B) a phosphinic acid salt, (C) a phosphazene compound, and (D) a nitrogen-containing cyclic compound, which exhibits a flame retardance in accordance with a UL94 flammability test of V-0, a glow-wire ignition temperature (GWIT) in accordance with IEC60695-2-13 standard of 775°C or more, and a comparative tracking index (CTI) in accordance with IEC60112 standard of 400 V or more, and bleed out does not occur when the composition is treated at 110°C for 20 hours.

## Description

### Technical Field

The present invention relates to a flame-retardant polybutylene telephthalate resin composition using a polybutylene telephthalate resin as a base resin, and a molded product formed by molding the flame-retardant polybutylene telephthalate resin composition.

### Background Art

Polybutylene telephthalate resins (hereinafter also referred to as "PBT resins") have high heat deformation temperatures, and are excellent in electrical properties, mechanical properties, weather resistance, chemical resistance and the like, and thus are utilized in various applications such as electric and electronic parts and automobile parts. In such applications, flame retardance is an important property, and various considerations have been made so as to impart flame retardance to PBT resins. In the past, a method for imparting flame retardance by adding a halogen-based flame retarder to a PBT resin has been adopted. However, halogen-based flame retarders sometimes generate dioxin-based compounds upon decomposition by combustion, and thus the use thereof was restricted due to the fears of adverse effects on the environment, and consequently the development of non-halogen flame retarders as alternative products has proceeded. As the non-halogen flame retarders, organic phosphorus-based flame retarders, nitrogen-based flame retarders, inorganic hydrate-based flame retarders such as magnesium hydroxide, silicone-based flame retarders and the like are known.

Under such circumstance, as a flame-retardant resin composition using a PBT resin as a base resin, resin compositions containing a PBT resin and a phosphorus-based flame retarder and a nitrogen-based flame retarder have been suggested (for example, see Patent Literatures 1 to 4). For such resin compositions, a phosphazene compound or a phosphinic acid salt, which contributes to improvement of a glow-wire property, is used as the phosphorus-based flame retarder. However, there is a problem that the phosphazene compound exudes outside at a high temperature and a high humidity, and the like, so-called bleed out. Therefore, bleed out is prevented by forming an alloy of a base resin with other resins. Furthermore, in the case where the addition amount of the phosphazene compound is suppressed so as to decrease bleed out, there is also a method in which the phosphazene compound is used in combination with other flame retarder such as a phosphinic acid salt so as to ensure flame retardance. Phosphinic acid salts are excellent in flame retardance, but the phosphinic acid salts themselves are expensive; therefore, there are a problem in cost, problems in handling such as easy occurrence of bridging, and a problem that a resin composition containing much flame retarder tends to have decreased mechanical properties, and thus phosphinic acid salts have not been positively used in combination, and a composition that satisfies all of these has not been obtained in the past.

On the other hand, in applications for use in parts that are used in the vicinities of power sources of electric-electronic products such as a relay, a switch and a connector, a tracking resistance is required in addition to flame retardance and glow-wire property (GWIT) for securing of safeness, and the like. As the additive for imparting tracking resistance, nitrogen-containing cyclic compounds are preferably used since they also have flame retardance. However, the flame retardance of the nitrogen-containing cyclic compounds is not so high, and thus it is necessary to use other flame retarder so as to enhance the flame retardance.

Accordingly, it is considered that the properties required for the flame-retardant resin compositions for use in the above-mentioned parts can be achieved by using a phosphazene compound, a phosphinic acid salt and a nitrogen-containing cyclic compound in combination, but any resin composition in which flame retarders are combined in this way is not known.

Furthermore, in the case where a certain amount or more of a phosphazene compound is used, it is necessary to prevent bleed out; however, if an alloy is formed by a base resin with other resins as mentioned above, the respective properties may be affected depending on the kinds of the resins used.

### Citation List

### Patent Literature

Patent Literature 1: JP 2003-342482 A
Patent Literature 2: JP 2010-24324 A
Patent Literature 3: JP 2009-292897 A
Patent Literature 4: JP 2003-82211 A

### Summary of Invention

### Technical Problem

The present invention has been made in view of the above-mentioned conventional problems, and the object thereof is to provide a flame-retardant polybutylene telephthalate resin composition that is excellent in flame retardance, glow-wire property (GWIT), tracking resistance and bleed resistance, and a molded product of the composition in the case where a polybutylene telephthalate resin is singly used as a resin component.

### Solution to Problem

The present invention that solves the above-mentioned problem is as follows.
(1) A flame-retardant polybutylene telephthalate resin composition containing (A) a polybutylene telephthalate resin, (B) a phosphinic acid salt, (C) a phosphazene compound, and (D) a nitrogen-containing cyclic compound,
   which exhibits a flame retardance in accordance with a UL94 flammability test of V-0, a glow-wire ignition temperature (GWIT) in accordance with IEC60695-2-13 standard of 775°C or more, and a comparative tracking index (CTI) in accordance with IEC60112 standard of 400 V or more, and bleed out does not occur when the composition is treated at 110°C for 20 hours.
(2) The flame-retardant polybutylene telephthalate resin composition according to (1), which contains the phosphazene compound (C) by 4% by mass or more and 20% by mass or less.
(3) The flame-retardant polybutylene telephthalate resin composition according to (1) or (2), which contains the phosphinic acidsalt (B) by 20 to 60 parts by mass, the phosphazene compound (C) by 10 to 60 parts by mass, and the nitrogen-containing cyclic compound (D) by 5 to 45 parts by mass, with respect to 100 parts by mass of the polybutylene telephthalate resin (A).
(4) The flame-retardant polybutylene telephthalate resin composition according to any of (1) to (3), wherein bleed out does not occur when the composition is treated at 140°C for 20 hours.
(5) The flame-retardant polybutylene telephthalate resin composition according to any of (1) to (4), wherein the nitrogen-containing cyclic compound (D) is a melamine cyanuric acid.
(6) The flame-retardant polybutylene telephthalate resin composition according to any of (1) to (5), which exhibits a comparative tracking index (CTI) of 600 V or more.
(7) A molded product, which is formed by molding the flame-retardant polybutylene telephthalate resin composition according to any of (1) to (6), and which directly supports connection parts in which a rated current of greater than 0.2 A flows, or which is used at a distance within 3 mm from these connection parts.
(8) The molded product according to (7), wherein the molded product is a part around a power source of a dishwasher, a refrigerator, a heater, an air-conditioner, a laundry machine, a microwave oven or an electrical tool.
(9) The molded product according to (8), wherein the part around a power source is a relay, a switch, a connector, an actuator or a sensor.

### Advantageous Effects of Invention

According to the present invention, a flame-retardant polybutylene telephthalate resin composition that is excellent in flame retardance, glow-wire property (GWIT), tracking resistance and bleed resistance even in the case where a polybutylene telephthalate resin is singly used as a resin component, and a molded product of the composition can be provided.

### Brief Description of Drawing

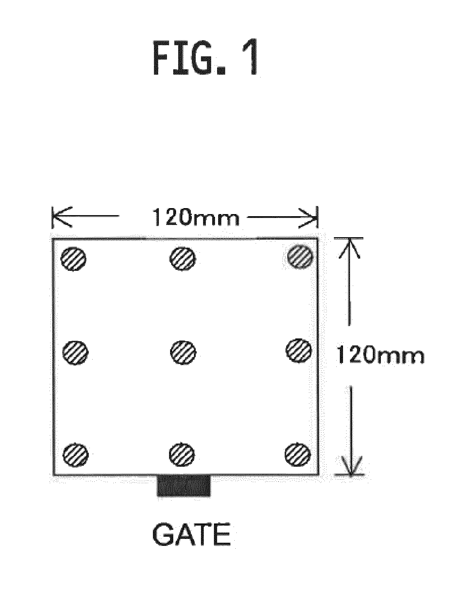

Fig. 1 is a plan view showing a test piece for use in the measurement of flatness.

### Description of Embodiments

### <Flame-retardant resin composition>

The flame-retardant polybutylene telephthalate resin composition of the present invention (hereinafter also called as "flame-retardant PBT resin composition") is characterized by being a flame-retardant polybutylene telephthalate resin composition containing (A) a polybutylene telephthalate resin, (B) a phosphinic acid salt, (C) a phosphazene compound, and (D) a nitrogen-containing cyclic compound, which exhibits a flame retardance in accordance with a UL94 flammability test of V-0, a glow-wire ignition temperature (GWIT) in accordance with IEC60695-2-13 standard of 775°C or more, and a comparative tracking index (CTI) in accordance with IEC60112 standard of 400 V or more, and bleed out does not occur when the composition is treated at 110°C for 20 hours.

As mentioned above, in the past, it was essential to form a resin into an alloy so as to prevent bleed out in the case where a phosphazene compound is used. The flame-retardant PBT resin composition of the present invention enables suppression of bleed out by combining predetermined flame retarders without forming the resin into an alloy, despite the use of a phosphazene compound.

Firstly, the respective components of the flame-retardant PBT resin composition of the present invention will be explained below.

### [(A) Polybutylene telephthalate]

A polybutylene telephthalate resin (PBT) is a resin that is obtained by polycondensation of a dicarboxylic acid component containing at least telephthalic acid or an ester-forming derivative thereof (an C₁₋₆ alkyl ester, an acid halide product or the like) and a glycol component containing at least an alkylene glycol having 4 carbon atoms (1, 4-butanediol) or an ester-forming derivative thereof (an acetylated product or the like). The polybutylenelate resin is not limited to a homopolybutylene telephthalate, and may be a copolymer containing 60 mol% or more (especially 75 mol% or more and 95 mol% or less) of butylene telephthalate units.

The amount of the terminal carboxyl groups in the polybutylene telephthalate resin is not especially limited as long as the effect of the present invention is not inhibited. The amount of the terminal carboxyl groups in the polybutylene telephthalate resin is preferably 30 meq/kg or less, more preferably 25 meq/kg or less.

The inherent viscosity (IV) of the polybutylene telephthalate resin is not especially limited to the extent that the effect of the present invention is not inhibited. The inherent viscosity of the polybutylene telephthalate resin is preferably from 0.80 to 1.20 dL/g. In view of prevention of cracking, improvement of toughness for improving heating/cooling durability, the inherent viscosity is further preferably from 0.85 to 1.15 dL/g. In the case where a polybutylene telephthalate resin having an inherent viscosity in such range is used, the obtained polybutylene telephthalate resin composition is especially excellent in moldability. Furthermore, the inherent viscosity can also be adjusted by blending polybutylene telephthalate resins having different inherent viscosities. For example, by blending a polybutylene telephthalate resin having an inherent viscosity of 1.0 dL/g and a polybutylene telephthalate resin having an inherent viscosity of 0.8 dL/g, a polybutylene telephthalate resin having an inherent viscosity of 0.9 dL/g can be prepared. The inherent viscosity (IV) of the polybutylene telephthalate resin can be measured, for example, under a condition of a temperature of 35°C in o-chlorophenol.

In the polybutylene telephthalate resin, examples of the dicarboxylic acid components (comonomer components) other than telephthalic acid and ester-forming derivatives thereof include C₈₋₁₄ aromatic dicarboxylic acids such as isophthalic acid, phthalic acid, 2,6-naphthalenedicarboxylic acid and 4,4'-dicarboxydiphenyl ether; C₄₋₁₆ alkane dicarboxylic acids such as succinic acid, adipic acid, azelaic acid and sebacic acid; C₅₋₁₀ cycloalkanedicarboxylic acids such as cyclohexanedicarboxylic acid; and ester-forming derivatives of these dicarboxylic acid components (C₁₋₆ alkyl ester derivatives, acid halide products, and the like). These dicarboxylic acid components can be used singly or in combination of two or more kinds.

Among these dicarboxylic acid components, C₈₋₁₂ aromatic dicarboxylic acids such as isophthalic acid, and C₆₋₁₂ alkanedicarboxylic acids such as adipic acid, azelaic acid and sebacic acid are more preferable.

In the polybutylene telephthalate resin, examples of the glycol components (comonomer components) other than 1,4-butanediol include C₂₋₁₀ alkylene glycols such as ethylene glycol, propylene glycol, trimethylene glycol, 1,3-butylene glycol, hexamethylene glycol, neopentyl glycol and 1,3-octanediol; polyoxyalkylene glycols such as diethylene glycol, triethylene glycol and dipropylene glycol; alicyclic diols such as cyclohexanedimethanol and hydrogenated bisphenol A; aromatic diols such as bisphenol A and 4,4' -dihydroxybiphenyl; C₂₋₄ alkylene oxide adducts of bisphenol A such as ethylene oxide 2-mol adduct of bisphenol A and propylene oxide 3-mol adduct of bisphenol A; or ester-forming derivatives of these glycols (acetylated products and the like). These glycol components can be used singly or in combination of two or more kinds.

Among these glycol components, C₂₋₆ alkylene glycols such as ethylene glycol and trimethylene glycol, polyoxyalkylene glycols such as diethylene glycol, or alicyclic diols such as cyclohexanedimethanol, and the like are more preferable.

Examples of the comonomer components that can be used other than the dicarboxylic acid component and glycol component include aromatic hydroxycarboxylic acids such as 4-hydroxybenzoic acid, 3-hydroxybenzoic acid, 6-hydroxy-2-naphthoic acid and 4-carboxy-4'-hydroxybiphenyl; aliphatic hydroxycarboxylic acids such as glycolic acid and hydroxycapronic acid; C₃₋₁₂ lactones such as propiolactone, butyrolactone, valerolactone and caprolactone (ε-caprolactone and the like); and ester-forming derivatives of these comonomer components (C₁₋₆ alkyl ester derivatives, acid halide products, acetylated products and the like).

### [(B) Phosphinic acid salt]

The phosphinic acid salt plays a role of imparting flame retardance. Examples of the phosphinic acid salt include salts of phosphinic acid, diphosphinic acid, or polymerized products thereof (or condensates such as polyphosphinic acid) and the like [metal salts; and boron salts (boryl compounds and the like), ammonium salts, salts with amino group-containing nitrogen-containing compounds, and the like) and the like]. The phosphinic acid salts can be used singly or in combination of two or more kinds. The phosphinic acids may have either of chain and cyclic structures.

The phosphinic acid, diphosphinic acid or polymerized products thereof that form a salt may be phosphinic acid, diphosphinic acid and the like having no organic groups, but are generally organic phosphinic acids, organic diphosphinic acids, polymerized products (or condensates) of organic diphosphinic acids, and the like in many cases. The above-mentioned salts may contain one kind from these phosphinic acids, or may contain two or more kinds in combination.

Among the above-mentioned phosphinic acid salts, metal salts are especially preferable. Examples of the metals that form the salts include alkali metals (potassium, sodium and the like), alkaline earth metals (magnesium, calcium and the like), transition metals (iron, cobalt, nickel, copper and the like), metals of Group 12 of the periodic table (zinc and the like), metals of Group 13 of the periodic table (aluminum and the like) and the like. The above-mentioned metal salts may contain one kind of these metals, or may contain two or more kinds in combination. Among the above-mentioned metals, alkaline earth metals (magnesium, calcium and the like) and metals of Group 13 of the periodic table (aluminum and the like) are preferable.

The number of valency of the metal is not especially limited, and may be, for example, a number of valency of about 1 to 4, preferably 2 to 4, more preferably 2 or 3.

As the above-mentioned phosphinic acid metal salt, a compound represented by the following formula (1) is specifically exemplified, and a compound wherein the diphosphinic acid metal salt is represented by the following formula (2) is exemplified.

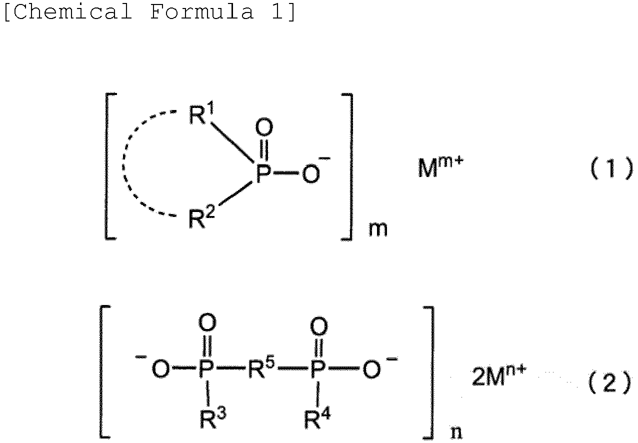

Wherein R¹, R², R³ and R⁴ are the same or different, and each independently represents an alkyl group, a cycloalkyl group, an aryl group or an aralkyl group, and R⁵ represents an alkylene group, an alicyclic divalent group or an aromatic divalent group. R¹ and R² may bind to each other to form a ring together with the adjacent phosphorus atom. M^{m+} represents a metal having a valency number m, and m is an integer of 2 to 4. Mⁿ⁺ represents a metal having a valency number n, and n is an integer of 2 to 4.

Examples of the hydrocarbon group represented by R¹ to R⁴ include alkyl groups (for example, linear or branched chain C₁₋₆ alkyl groups such as methyl, ethyl, isopropyl, n-butyl and t-butyl groups), cycloalkyl groups (C₅₋₈ cycloalkyl groups such as a cyclohexyl group, and the like), aryl groups (C₆₋₁₀ aryl groups such as a phenyl group, and the like), aralkyl groups (C₆₋₁₀ aryl-C₁₋₄ alkyl groups such as a benzyl group, and the like), and the like. Among these groups, alkyl groups (preferably C₁₋₄ alkyl groups and the like), aryl groups (a phenyl group and the like) and the like are generally preferable.

The rings that are formed by bonding of R¹ and R² together with the adjacent phosphorus atom are hetero rings having the above-mentioned phosphorus atom having the hetero atom that constitute a ring (phosphorus atom-containing hetero rings), and generally include 4- to 20-membered hetero rings, preferably 5- to 16-membered hetero rings. Furthermore, the above-mentioned phosphorus atom-containing hetero ring may be a bicyclic ring. The above-mentioned phosphorus atom-containing hetero ring may have substituents.

Examples of the divalent hydrocarbon group represented by R⁵ include alkylene groups (or alkylidene groups such as linear or branched chain C₁₋₁₀ alkylene groups optionally having substituents such as C₆-₁₀ aryl groups, such as methylene, ethylene, phenylethylene, propylene, trimethylene, 1,4-butanediyl and 1,3-butanediyl groups), alicyclic divalent groups (C₅₋₈ alicyclic divalent groups such as a cyclohexylene group and a cyclohexadimethylene group, and the like), aromatic divalent groups [C₆₋₁₀ arylene groups optionally having substitutes such as C₁₋₄ alkyl group (s) such as a phenylene group and a trylene group; C₆-₁₀ arylene di-C₁₋₄ alkylene groups optionally having C₁₋₄ alkyl group (s) such as a methyl group on an arene ring such as a xylylene group; bisaryl groups optionally having C₁₋₄ alkyl group(s) such as a methyl group on an arene ring (for example, a biphenylene group; linear or branched chain C₁₋₄ alkane-di C₆-₁₀ arylene groups such as a metadiphenylene group; divalent groups corresponding to C₆-₁₀ aryl ethers such as diphenyl ether; divalent groups corresponding to di-C₆₋₁₀ aryl ketones such as diphenylketone; divalent groups corresponding to di-C₆₋₁₀ aryl sulfides such as diphenylsulfide, and the like) and the like] and the like. Among these divalent hydrocarbon groups, alkylene groups (especially C₁₋₆ alkylene groups and the like) are preferable.

Preferable metal salts (1) and (2) are polyvalent metal salts in which the valency numbers (m and n) of the metal M are each 2 to 3.

Specific examples of the metal salt of phosphinic acid (1) include Ca salts of dialkylphosphinic acids such as Ca dimethylphosphinate, Ca methylethylphosphinate and Ca diethylphosphinate and the like (Ca salts of di-C₁₋₁₀ alkyl phosphinic acids and the like), Ca salts of arylphosphinic acids such as Ca phenylphosphinate and Ca diphenylphosphinate (Ca salts of mono or di-C₆₋₁₀ aryl phosphinic acids and the like), Ca salts of alkylaryl phosphinic acid (Ca salts of C₁₋₄ alkyl-C₆₋₁₀ aryl phosphinic acids, and the like) such as Ca methylphenyl phosphinate, Ca salts of alkylenephosphinic acids (Ca salts of C₃₋₈ alkylenephosphinic acids, and the like) optionally having substituent(s) such as Ca salt of 1-hydroxy-1H-phosphorane-1-oxide and Ca salt of 2-carboxy-1-hydroxy-1H-phosphorane-1-oxide, Al salts corresponding to these Ca salts, other metal salts, and the like.

Specific examples of the metal salts of diphosphinic acid (2) include Ca salts of alkanebis(phosphinic acid) [Ca salts of C₁₋₁₀ alkanebis (phosphinic acid) and the like] such as Ca salt of ethane-1, 2-bis (phosphinic acid) and Ca salts of alkanebis (C₁₋₆ alkylphosphinic acid) and the like such as Ca salts of ethane-1,2-bis(methylphosphinic acid), Al salts corresponding to these Ca salts, other metal salts, and the like.

The metal salts of phosphinic acid also include polymerized products or condensates of these polyvalent metal salts of phosphinic acid and/or polyvalent metal salts of diphosphinic acid.

As the salt of phosphinic acid salt, at least one kind selected from polyvalent metal salts of phosphinic acid, polyvalent metal salts of diphosphinic acid, and polyvalent metal salts of polymerized products (or condensates) of diphosphinic acid is preferable.

Among the metal salts represented by the above-mentioned formula (1) or (2), preferable phosphinic acid salts are especially metal salts of dialkylphosphinic acids (Ca salts, Al salts and the like), metal salts of alkanebisphosphinic acids (Ca salts, Al salts and the like) and the like.

The average particle diameter of the phosphinic acid salt is preferably 100 µm or less, more preferably 80 µm or less, and further preferably 50 µm or less. If the average particle diameter goes beyond 100 µm, deterioration of the surface roughness of the molded product is caused, and it is possible that the effects of improving toughness and flame retardance become insufficient.

The average particle diameter of the phosphinic acid salt is obtained as a median diameter by a laser diffraction/scattering type particle size distribution measurement apparatus or the like.

In the flame-retardant PBT resin composition of the present invention, the phosphinic acid salt is contained preferably by 20 to 60 parts by mass, more preferably by 25 to 55 parts by mass, with respect to 100 parts by mass of the PBT resin.

### [(C) Phosphazene compound]

The phosphazene compound is used so as to increase the glow-wire ignition temperature (GWIT) and tracking resistance. The phosphazene compound includes cyclic phosphazene compounds, chain phosphazene compounds and the like.

The cyclic phosphazene compounds include a compound represented by the following formula (3).

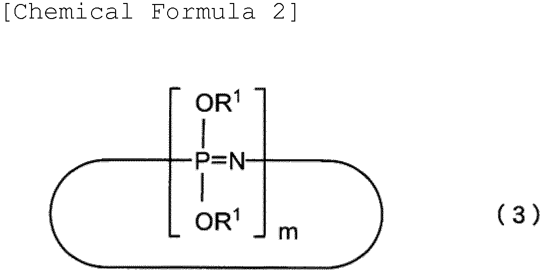

In the formula, m represents an integer of 3 to 25. R¹ is the same or different, and each represents an aryl group or an alkylaryl group. However, the ratio of the alkylaryl group is 0.1 to 100 mol% with respect to the total amount of R¹.

The chain phosphazene compound includes a compound represented by the following formula (4).

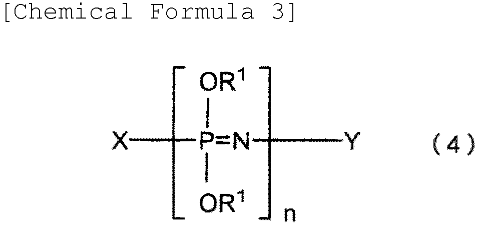

In the formula, n represents an integer of from 3 to 10,000. X represents a group -N=P(OR¹)₃ or a group -N=P(O)OR¹, and Y represents a group -P(OR¹)₄ or a group -P(O)(OR¹)₂. R¹ is the same or different, and each represents an aryl group or an alkylaryl group. However, the ratio of the alkylaryl group is 0.1 to 100 mol% with respect to the total amount of R¹.

In the formulas (3) and (4), the alkylaryl groups represented by R¹ are tolyls (o-tolyl, m-tolyl, p-tolyl and the like), xylyls (3,4-xylyl, 3,5-xylyl, 2,3-xylyl, 2,4-xylyl, 2, 5-xylyl, 2, 6-xylyl and the like), ethylphenyl, cumyls (o-cumyl, m-cumyl, p-cumyl, phenylcumyl and the like), butylphenyls (2-t-butylphenyl, 4-t-butylphenyl, 2,4-di-t-butylphenyl, 2,6-di-t-butylphenyl, 3-methyl-6-t-butylphenyl, 2,6-di-t-butyl-4-methylphenyl and the like), amylphenyls (2, 4-di-t-amylphenyl, 2, 6-di-t-amylphenyl and the like), C₁₋₁₀ alkyl C₆₋₂₀ aryl groups such as cyclohexylphenyl, trimethylphenyl and methylnaphthyl, and the like, and are preferably C₁₋₃ alkylphenyl groups (for example, o-tolyl, m-tolyl, p-tolyl, 2,4-xylyl, 2,6-xylyl, 3,5-xylyl groups) and the like.

As the aryl group represented by R¹, C₆₋₂₀ aryl groups such as a phenyl group, a naphthyl group, biphenylyl groups (o-phenylphenyl, m-phenylphenyl, p-phenylphenyl groups and the like), alkoxyphenyl groups (o-methoxyphenyl, m-methoxyphenyl, p-methoxyphenyl groups and the like), hydroxyphenyl groups (o-hydroxyphenyl, m-hydroxyphenyl, p-hydroxyphenyl groups, a p-(p'-hydroxyphenyl)phenyl group, and the like), (hydroxyaryl)alkylaryl groups (a p-[2-(p'-hydroxyphenyl)isopropyl]phenyl group and the like), (hydroxyarylsulfonyl)aryl groups (a p-(p'-hydroxyphenylsulfonyl)phenyl group) and (hydroxyaryloxy)aryl (a p- (p' -hydroxyphenyloxy) phenyl group and the like), and the like can be exemplified, and is generally a phenyl group.

As the cyclic and/or chain phosphazene compounds represented by the formulas (3) and (4), cyclic and/or chain C₁₋₆ alkyl C₆₋₂₀ aryloxyphosphazenes such as (poly)tolyloxyphosphazenes (for example, o-tolyloxyphosphazene, m-tolyloxyphosphazene, p-tolyloxyphosphazene, o,m-tolyloxyphosphazene, o,p-tolyloxyphosphazene, m,p-tolyloxyphosphazene, o,m,p-tolyloxyphosphazene and the like), (poly)xylyloxyphosphazene and (poly) methylnaphthyloxyphosphazene, cyclic and/or chain C₆₋₂₀ aryl-C₁₋₁₀ alkyl-C₆₋₂₀ aryloxyphosphazenes such as (poly)phenoxytolyloxyphosphazenes (for example, phenoxy-o-tolyloxyphosphazene, phenoxy-m-tolyloxyphosphazene, phenoxy-p-tolyloxyphosphazene, phenoxy-o,m-tolyloxyphosphazene, phenoxy-o,p-tolyloxyphosphazene, phenoxy-m,p-tolyloxyphosphazene, phenoxy-o,m,p-tolyloxyphosphazene and the like), (poly)phenoxyxylyloxyphosphazene, (poly)phenoxytolyloxyxylyloxyphosphazene and (poly)phenoxymethylnaphthyloxyphosphazene can be exemplified, and cyclic and/or chain C₁₋₃ alkyl-C₆₋₂₀ aryloxyphosphazene and C₆₋₂₀ aryloxy-C₁₋₃ alkyl-C₆₋₂₀ aryloxyphosphazene (for example, cyclic and/or tolyloxyphosphazenes, cyclic and/or chain phenoxytolylphenoxyphosphazenes and the like, especially cyclic tolyloxyphosphazenes and cyclic phenoxytolyloxyphosphazenes) are preferable.

Furthermore, in the present invention, the phosphazene compounds also include crosslinked phosphazene compounds in which at least one kind of phosphazene compound selected from the above-mentioned cyclic phosphazene compound (1) and the chain phosphazene compound (2) is crosslinked with a crosslinking group. In the case where a pair of the above-mentioned phosphazene compounds is crosslinked with the above-mentioned crosslinking group, a divalent crosslinking group has been introduced instead of a pair of R¹ groups. The crosslinking group may be an alkylene group or a cycloalkylene group, and is generally an arylene group. As the arylene group, phenylene groups (a 1,2-phenylene group, a 1,3-phenylene group, a 1,4-phenylene group and the like), a naphthylene group,biphenylene groups (a 4,4'-biphenylene group, a 3,3'-biphenylene group and the like), bisphenol residues [a 1,4-phenyleneisopropylidene-1,4-phenylene group (a bisphenol-A residue), a 1,4-phenylenemethylene-1,4-phenylene group (a bisphenol-F residue), a 1,4-phenylenecarbonyl-1,4-phenylene group, a 1,4-phenylenesulfonyl-1,4-phenylene group (a bisphenol-S residue), a 1,4-phenylenethio-1,4-phenylene group, a 1,4-phenyleneoxy-1,4-phenylene group and the like] and the like are preferable. The ratio of the crosslinking group is about 0.01 to 50 mol%, preferably about 0.1 to 30 mol% with respect to the total amount of the R¹ group. As the crosslinked phosphazene compound, for example, crosslinked phenoxyphosphazene, crosslinked tolyloxyphosphazene, crosslinked xylyloxyphosphazene, crosslinked tolyloxyxylyloxyphosphazene, crosslinked phenoxytolyloxyphosphazene, crosslinked phenoxyxylyloxyphosphazene and crosslinked phenoxytolyloxyxylyl phosphazene which have been crosslinked with at least one kind of arylene group selected from the above-mentioned phenylene group, naphthylene group and bisphenol residue, and the like are exemplified.

The crosslinked phenoxyphosphazene compound may have free hydroxyl groups, but generally does not substantially have free hydroxyl groups in the molecule.

In the cyclic phosphazene compound, the repeating number m is preferably from about 3 to 20, further preferably from about 3 to 15. In the chain phosphazene compound, the polymerization degree n is preferably from about 3 to 7000, further preferably from about 3 to 5000. In the case where the content of the tolyloxy group in the cyclic and/or chain phenoxytolyloxyphosphazene is small, phenoxyphosphazene is contained in some cases. In the phosphazene compound, the ratio of the alkylaryloxy group with respect to the total amount of the phenoxy group and alkylaryloxy group is from about 0.1 to 100 mol%, preferably from about 0.1 to 50 mol%, further preferably from about 0.1 to 30 mol% (especially from 0.1 to 10 mol%).

Furthermore, the content of the chlorine contained in the phosphazene compound is not especially limited, and is generally a small chlorine content, such as 1, 000 ppm or less (for example, from 0 to 1, 000 ppm), preferably from 0 to 500 ppm, more preferably from 0 to 100 ppm or less, further preferably from 0 to 50 ppm.

The acid value of the phosphazene compound is not especially limited, and is for example 0.5 mgKOH/g or less, preferably 0.4 mgKOH/g or less (for example, from 0.01 to 0.4 mgKOH/g), further preferably about 0.3 mgKOH/g or less (for example, 0.01 to 0.3 mgKOH/g).

These phosphazene compounds can be used singly, or in combination of two or more kinds.

The cyclic and chain phosphazene compounds represented by the formulas (3) and (4) can be synthesized by, for example, the methods described in "Phosphorus-Nitrogen Compounds" authored by H. R. Allcock, Academic Press, (1972), "Inorganic Polymers" authored by J. E. Mark and H. R. Allcock, R. West, Prentice-Hall International, Inc., (1992), JP 2001-192392 A, JP 2001-64292 A and the like.

For example, by reacting a phosphorus chloride (triphosphorus chloride, pentaphosphorus chloride or the like), ammonium chloride, and where necessary, chlorine (especially in the case where triphosphorus chloride is used as the phosphorus chloride) in a chlorine-based solvent (chlorobenzene, tetrachloroethane or the like), a mixture of a compound wherein the OR¹ groups in the formula (3) have been substituted with chlorine atoms (Cl) and m is represented by an integer of from 3 to 25 (a cyclic dichlorophosphazene oligomer) and a compound wherein the OR¹ groups in the formula (4) have been substituted with chlorine atoms, and n is represented by an integer of from 3 to 25 (a chain dichlorophosphazene oligomer) can be obtained. By substituting the chlorine atoms in the dichlorophosphazene oligomer mixture with an alkali metal alkylphenolate (sodium methyl phenolate or the like) or an alkali metal alcoholate or the like with a hydroxyl compound (an alkylphenol, an alcohol or the like), the cyclic and chain phosphazene compounds represented by the formulas (3) and (4) can be obtained.

As the alkali metal for constituting the alkali metal salt, sodium, potassium, lithium and the like, preferably sodium and lithium can be exemplified.

The temperature for the reaction of the phosphorus chloride and ammonium chloride is, for example, from about 120 to 130°C.

Where necessary, the dichlorophosphazene oligomer mixture may be subjected to purification (distillation, recrystallization or the like) or polymerization (ring-opening polymerization of the cyclic dichlorophosphazene oligomer). By purifying the dichlorophosphazene oligomer mixture, a single substance of the cyclic dichlorophosphazene (hexachlorocyclotriphosphazene, octachlorocyclotetraphosphazene, decachlorocyclopentaphosphazene or the like) can be taken out. Therefore, by substituting this single substance with a hydroxyl compound (for example, cresol), cyclic phosphazene compounds such as hexatolyloxycyclotriphosphazene, octatolyloxycyclotetraphosphazene and decatolyloxycyclopentaphosphazene can be obtained.

On the other hand, when the cyclic dichlorophosphazene oligomer is subjectedto ring-opening polymerization, a compound in which the OR¹ groups in the formula (4) have been substituted with chlorine atoms, and n is represented by an integer of from 3 to 10,000 is obtained. Therefore, by substituting this compound with the above-mentioned hydroxy compound, the chain phosphazene compound represented by the formula (4) can be obtained.

The ring-opening polymerization of the cyclic dichlorophosphazene oligomer can be conducted by, for example, heating to 220 to 250°C.

Such phosphazene compound is available as "KEMIDANT 302S" [Chemipro Kasei] or the like.

In the flame-retardant PBT resin composition of the present invention, the phosphazene compound is contained by preferably 10 to 60 parts by mass, more preferably by more than 10 parts by mass and 40 parts by mass or less, and further preferably by 15 to 30 parts by mass with respect to 100 parts by mass of the PBT resin.

Furthermore, the phosphazene compound is contained preferably by 4% by mass or more and 20% by mass or less, more preferably by 5% by mass or more and 15% by mass or less, further preferably by 6% by mass or more and 10% by mass or less with respect to the entirety of the composition.

### [(D) Nitrogen-containing cyclic compound]

The nitrogen-containing cyclic compound plays a role to impart flame retardance, tracking resistance and bleed resistance. Examples of the nitrogen-containing cyclic compound include (a) a nitrogen-containing cyclic compound having amino group (s), (b) a salt of a nitrogen-containing cyclic compound having amino group (s) and an oxygen acid, (c) a salt of a nitrogen-containing cyclic compound having amino group (s) and an organic phosphoric acid, (d) a melamine cyanuric acid, (e) a tetrazole compound, and the like.

### (a) Nitrogen-containing cyclic compound having amino group (s)

The nitrogen-containing cyclic compound having amino group (s) includes a heterocyclic compound having at least one amino group and at least one nitrogen atom as hetero atom(s) of the ring, and the hetero ring may have other hetero atoms such as sulfur and oxygen besides nitrogen. Such nitrogen-containing hetero ring includes 5- or 6-membered unsaturated nitrogen-containing hetero rings having plural nitrogen atoms as the constitutional atoms of the ring such as imidazole, thiaziazole, thiaziazoline, furazan, triazole, thiaziazine, pyrazine, pyrimidine, pyridazine, triazine and purine. Among such nitrogen-containing rings, 5- or 6-membered unsaturated nitrogen-containing rings having plural nitrogen atoms as the constitutional atoms of the ring are preferable, and triazole and triazine are especially preferable.

As the triazole compound, 1,2,3-triazoles (1H-1,2,3-triazoles; 2H-1,2,3-triazoles and the like), and 1,2,4-triazoles (1H-1,2,4-triazoles such as guanazole; 4H-1,2,4-triazoles such as guanazine; and the like) can be exemplified, and suitable sites of the triazole ring (nitrogen atom and carbon atom, especially carbon atom) may be substituted with amino group(s). The number of the amino group(s) is not especially limited, and is 1 to 3, especially about 1 to 2.

The triazine compound includes 1, 3, 5-triazines [melamine, substituted melamines (alkylmelamines such as 2-methylmelamine, guanylmelamine, and the like), melamine condensates (melam, melem, melon and the like), melamines or derivatives such as melamine co-condensate resins (melamine-formaldehyde resins, phenol-melamine resins, benzoguanamine-melamine resins, aromatic polyamine-melamine resins and the like) ; cyanuric acid amides such as ammeline and ammelide; guanamine or derivatives thereof such as guanamine, methylguanamine, acetoguanamine, benzoguanamine, succinoguanamine and CTU-guanamine], various amino triazines such as amino group-containing 1,2,3-triazines (1,2,3-triazines substituted with amino group (s) at 5-position, 4,5-positions, 4,5,6-positions or the like, 4-amino-benzo-1,2,3-triazine, and the like), amino group-containing1,2,4-triazines (1,2,4-triazinessubstituted with amino group(s) at 3-position, 5-position, 3,5-positions or the like). The suitable site(s) (nitrogen atom and carbon atom, especially carbon atom) of the triazine ring may be substituted with amino group (s). The number of the amino group (s) is not especially limited, and is 1 to 4, especially about 1 to 3 (for example, 1 to 2).

Among these, amino group-containing triazine compounds, especially amino group-containing 1,3,5-triazines are preferable.

### (b) Salt of nitrogen-containing cyclic compound having amino group(s) with oxygen acid

As the nitrogen-containing cyclic compound having amino group (s), similar nitrogen-containing cyclic compounds to that in the above-mentioned (a) can be used.

The nitrogen-containing cyclic compound having amino group(s) may form a salt with an oxygen acid at the nitrogen atom site (imino group) that constitutes the ring, and it is generally preferable that a salt is formed by at least one amino group by which the ring is substituted and the oxygen acid. In the case where the nitrogen-containing cyclic compoundhas plural amino groups, all of the amino groups may form salts with the oxygen acid. Furthermore, plural nitrogen-containing compounds of the same kind or different kinds (the above-mentioned nitrogen-containing cyclic compound or other amino group-containing nitrogen-containing compound) may form a double salt of polyacids by forming a salt with one polyacid.

### (Oxygen acid)

The oxygen acids include nitric acid, chloric acids (perchloric acid, chloric acid, chlorous acid, hypochlorous acid and the like), phosphoric acids, sulfuric acid, sulfonic acid, boric acid, chromic acid, antimonic acid, molybdic acid, tungstic acid, stannic acid, silicic acid and the like. Preferable oxygen acids include phosphoric acids (polyphosphoric acid), sulfuric acid, sulfonic acid and boric acid.

### (1) Phosphate salt of nitrogen-containing cyclic compound having amino group(s)

Phosphoric acids include non-condensed phosphoric acids such as peroxophosphoric acid, orthophosphoric acid, metaphosphoric acid, phosphorous acid (phosphonic acid) and hypophosphorous acid (phosphinic acid); condensed phosphoric acids (polyphosphoric acids) such as polymetaphosphoric acid(HPO₃)ₛ: wherein in the formula, s represents an integer of 2 or more), hypophosphoric acid and anhydrous phosphoric acid (diphosphorus pentaoxide), and the like. Furthermore, the above-mentioned polyphosphoric acids also include condensed phosphoric acids represented by the following formula (5).

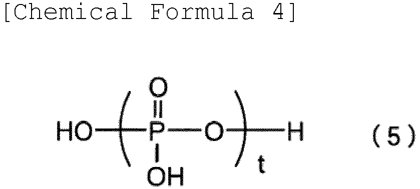

In the formula, t represents an integer of 2 or more.

In the above-mentioned formula, t is preferably an integer of from 2 to 200, further preferably an integer of from 3 to 100.

Furthermore, the above-mentioned polyphosphoric acids also include pyrosulfatephosphoric acid, triphosphoric acid, tetraphosphoric acid and the like.

In the phosphoric acid having plural sites being capable of forming a salt, at least a part of the sites may form partial salts with other amino group-containing compounds such as amines, urea and the like (partial salts of condensed acids of ammonium polyphosphate, urea polyphosphate and the like; partial salts of non-condensed acids such as orthophosphoric acid urea, and the like).

As the phosphoric acid salt of the nitrogen-containing cyclic compound having amino group(s), phosphoric acid salts of amino group-containing triazine compounds such as non-condensed phosphoric acid salts (melamine salts of non-condensed phosphoric acids such as orthophosphoric acid melamine and phosphonic acid melamine; melem salts, melam salts, melon salts, guanamine salts and the like corresponding to the above-mentioned melamine salts), polyphosphate salts [melamine pyrophosphate salts (melamine pyrophosphate, dimelamine pyrophosphate), melamine polyphosphates corresponding to these melamine pyrophosphate salts, tetraphosphate salts and the like; melem salts, melam salts, melon salts, guanamine salts and the like corresponding to the above-mentioned melamine polyphosphate salts, and the like] and the like. Furthermore, the polyphosphate salt may contain a sulfur atom derived from sulfuric acid. Triazole salts corresponding to the above-mentioned triazine salts, and the like can also be used.

The polyphosphate salts include melamine polyphosphate-melam-melem double salt and melamine metaphosphate-melam-melem double salt, as well as melamine-melam-melem double salts of the above-mentioned polyacids containing a sulfur atom (polyacids containing a sulfur atom, an oxygen atom and the like besides a phosphorus atom), and the like. For the details of these double salts, JP 10-306081 A and JP 10-306082 A can be referred to.

### (2) Sulfuric acid salt of nitrogen-containing cyclic compound having amino group(s)

As the sulfuric acid, non-condensed sulfuric acids such as peroxomonosulfuric acid, sulfuric acid and sulfurous acid, condensed sulfuric acids such as peroxodisulfuric acid and pyrosulfuric acid, and the like are exemplified.

As the sulfuric acid salt of the nitrogen-containing cyclic compound having amino group(s), sulfuric acid salts of amino group-containing triazine compounds such as condensed sulfuric acid salts [melamine sulfates (melamine sulfate, dimelamine sulfate, guanylmelamine sulfate and the like), non-condensed melamine sulfates corresponding to melamine sulfates such as melamine sulfite; melem salts, melam salts, melon salts, guanamine salts and the like corresponding to the above-mentioned non-condensed melaminesulfatesalts)], condensed sulfuric acid salts [melamine pyrosulfates (melamine pyrosulfate, dimelamine pyrosulfate and the like), melem salts, melam salts, melon salts, guanamine salts and the like corresponding to melamine pyrosulfuric acid salts] and the like can be exemplified. Furthermore, triazole salts corresponding to the above-mentioned triazine salts can also be used.

The melamine sulfates can be obtained by, for example, the method described in JP 8-231517 A or the like. Dimelam pyrosulf ate can be obtained by, for example, the method described in A.C.S. SymposiumSeries No. 425 "Fire and Polymers", Chapter 15, pages 211 to 238 (American Chemical Society, Washington D.C., 1990), the method described in JP 10-306082 A, or and the like. Such sulfuric acid salts of the nitrogen-containing cyclic compounds (triazine compounds) are available as, for example, "Apinon 901" or the like from Sanwa Chemical Co., Ltd.

### (3) Sulfonic acid salt of nitrogen-containing cyclic compound having amino group(s)

Examples of the sulfonic acid include organic sulfonic acids such as C₁₋₁₀ alkanesulfonic acids (for example, methanesulfonic acid, ethanesulfonic acid, ethanedisulfonic acid and the like), C₆₋₂₀ arylsulfonic acids (for example, benzenesulfonic acid, toluenesulfonic acid and the like).

As the sulfonic acid salt of the nitrogen-containing cyclic compound having amino group(s), sulfonic acid salts of amino group-containing triazine compounds (for example, melamine, melam, melem, melon, guanamine, acetoguanamine, benzoguanamine and the like) [melamine sulfonates (melamine methanesulfate, melam methanesulfonate, melem methanesulfonate, melamine methanesulfonate-melam-melem double salt, guanamine methanesulfonate and the like)] can be exemplified. Such organic sulfonic acid salts of nitrogen-containing cyclic compounds (triazine compounds) are available as, for example, "Melam Methanesulfonate MMS-200" from Nissan Chemical Industries, Ltd. and the like.

### (4) Boric acid salt of nitrogen-containing cyclic compound having amino group(s)

Examples of the boric acid include non-condensed boric acids such as orthoboric acid and metaboric acid; condensedboric acids such as tetraboric acid and boric anhydride, and the like.

As the boric acid salts of the nitrogen-containing cyclic compound having amino group(s), boric acid salts of amino group-containing triazine compounds such as non-condensed boric acid salts [melamine orthoborate salts (melamine salts of orthoboric acids such as mono- to tri-melamine orthoborates), orthoboric acid salts of melem salts, melam salts, melon salts, guanamine salts and the like corresponding to the above-mentioned melamine salts; metaboric acid salts corresponding to the above-mentioned orthoboric acid salts], polyboric acid salts [condensed melamine borate salts (melamine borate anhydride, melamine tetraborate and the like), melem salts, melam salts, melon salts, guanamine salts and the like corresponding to the above-mentioned melamine salts] and the like can be exemplified.

Such boric acid salts of nitrogen-containing cyclic compounds (triazine compounds) are available as, for example, "melapur" from BASF, "STORFLAM MLB" from Joseph Storey & Co LTD, "BUDIT 313" from Budenheim Iberica Comercial, and the like.

The above-mentioned oxygen acid salts can be used singly or in combination of two or more kinds.

The ratio of the nitrogen-containing cyclic compound having amino group (s) to the oxygen acid is not especially limited, and for example, the former / the latter (molar ratio) = from 1 / 20 to 20 / 1, preferably from 1 / 10 to 10 / 1 (for example, from 1 / 5 to 10 / 1), especially about from 1 / 2 to 8 / 1. The equivalent amount ratio of the amino group (s) possessed by the nitrogen-containing cyclic compound to the sites capable of forming salts of the oxygen acid is also not especially limited, and for example, the ratio is from 10 / 1 to 1 / 2, preferably from 5 / 1 to 1 / 1, especially about from 4 / 1 to 1 / 1.

### (c) Salt of nitrogen-containing cyclic compound having amino group(s) and organic phosphoric acid

As the nitrogen-containing cyclic compound having amino group(s), nitrogen-containing cyclic compounds having amino group (s) which are similar to that in the above-mentioned (a) can be exemplified.

As the organic phosphoric acid, for example, esters of the non-condensed phosphoric acids that are exemplified in the above-mentioned item (b) [phosphoric acids (orthophosphoric acid and the like), phosphonic acid and the like], and phosphonic acids or phosphinic acids substituted with organic group(s), and the like can be exemplified. It is sufficient that the organic phosphoric acid has at least one site that is capable of forming a salt with the nitrogen-containing cyclic compound having amino group(s).

The phosphoric acid esters (organic orthophosphoric acids) include mono- or di-phosphoric acid esters of alcohols (monovalent or polyvalent alcohols, monovalent or polyvalent phenols). The above-mentioned alcohols include the monovalent alcohols (especially C₁₋₁₀ aliphatic monools) and aliphatic polyols as exemplified in the above-mentioned item of the polyarylate-based resins, as well as C₁₋₁₀ aliphatic polyols such as glycerol and pentaerythritol; C₂₋₁₀ aliphatic polyols having hetero atom (s) such as nitrilotrimethanol; C₅₋₈ alicyclic monools (preferably C₅₋₆ cycloalkanols) such as cyclopentanol and cyclohexanol; C₅₋₈ alicyclic diols (preferably C₅₋₆ cycloalkanediols) such as cyclohexanediol; monovalent phenols such as phenol and alkylphenols (for example, mono- to tri-C₁₋₂₀ alkylphenols such as p- or m-cresol, 3,5-xylenol, trimethylphenol, t-butylphenol, p-octylphenol and nonylphenol), arylphenols (for example, phenylphenol, benzylphenol, cumylphenol), naphthol and hydroxybiphenyl; the monovalent aralkyl alcohols and aromatic ring diols as exemplified in the above-mentioned item of the polyarylate-based resins, and the like.

Such phosphoric acid ester include mono or di-C₁₋₁₀ alkyl phosphates such as methyl phosphate and dibutyl phosphate; mono-to tetra-phosphates of C₂₋₁₀ aliphatic polyvalent alcohols such as ethylene glycol monophosphate and pentaerythritol bisphosphate; phosphoric acid esters of monovalent phenols optionally having substituent (s) (C₁₋₄ alkyl groups and the like) (for example, mono or di-C₆₋₁₄ aryl phosphates optionally having C₁₋₄ alkyl group(s)) such as monophenyl phosphate, monocresyl phosphate, monoxylylphosphate, monotrimethylphenylphosphate, diphenyl phosphate, dicresyl phosphate, dixylyl phosphate and ditrimethylphenyl phosphate; mono or diphosphates of polyvalent phenols optionally having substituent (s) (C₁₋₄ alkyl group and the like) (for example, C₆₋₁₄ arylene mono- or di-phosphates optionally having C₁₋₄ alkyl group(s)) such as phenylene bisphosphate, and the like], alkyl-aryl phosphoric acid esters [C₁₋₁₀ alkyl C₆₋₁₄ aryl phosphates (preferably C₁₋₆ alkyl C₆-₁₀ aryl phosphates) such as methylphenyl phosphate, and the like] and the like.

The organic phosphonic acids include phosphonic acid monoesters corresponding to the above-mentioned phosphoric acid esters, organic phosphonic acids in which the hydrogen atom(s) that are directly bonded to the phosphorus atom of phosphonic acid has/have been substituted with organic group(s) (organic groups such as aliphatic hydrocarbon groups, alicyclic hydrocarbon groups, aromatic hydrocarbon groups and the like), organic phosphonic acid monoesters of the above-mentioned alcohols, and the like.

The above-mentioned organic phosphonic acids include aliphatic phosphonic acids [alkylphosphonic acids such as methylphosphonic acid, ethylphosphonic acid, propylphosphonic acid and butylphosphonic acid; mono or diphosphonic acid esters of aliphatic polyols such as 1-hydroxyethylidene-1-phosphonic acid and 1-hydroxyethylidene-1, 1-diphosphonic acid; C₁₋₁₀ alkyl group-substituted phosphonic acids (preferably C₁₋₆ alkyl-substituted phosphonic acids) optionally having substituent (s) (a hydroxyl group, a carboxyl group, ester groups and the like), such as phosphonocarboxylic acids such as phosphono C₁₋₁₀ aliphatic carboxylic acids or carboxylic acid esters thereof (carboxylic acid esters of phosphonocarboxylic acids such as ethyl phosphonoacetate and ethyl 3-phosphonopropionate, and the like) such as phosphonoacetic acid and 3-phosphonopropionic acid; C₁₋₁₀ alkylene diphosphonic acids such as ethylene bisphosphonic acid; phosphonic acids substituted with aliphatic polyvalent group(s) having hetero atom (s) such as nitrilotris (methylene phosphonic acid), and the like], aromatic phosphonic acids [C₆₋₁₀ aryl phosphonic acids such as phenylphosphonic acid and tolylphosphonic acid; phosphono C₇₋₁₅ aromatic carboxylic acids or carboxylic acid esters thereof such as phosphonobenzoic acid (carboxylic acid esters of phosphonoaromatic carboxylic acids such as ethyl phosphonobenzoate); phosphonic acids substituted with an aromatic polyvalent group optionally having substituent (s) (C₁₋₄ alkyl groups and the like) such as phenylene bisphosphonic acid, and the like] and the like. Furthermore, the above-mentioned organic phosphonic acids may also be phosphonic acids (polyvinyl phosphonic acids and the like) that are bound to polymer.

The organic phosphonic acidmonoesters include monoesters of the above-mentioned organic phosphonic acids and the alcohols as exemplified in the above-mentioned item of the phosphoric acid esters, C₁₋₁₀ alkyl phosphonic acid mono C₁₋₆ alkyl esters such as methylphosphonic acid monomethyl ester; diesters of phosphonocarboxylic acid (C₂₋₆ alkoxycarbonyl C₁₋₆ alkylphosphonic acid mono C₁₋₆ alkyl esters such as monoethyl ethoxycarbonylmethyl phosphonate and monoethyl ethoxycarbonylethylphosphonate, and the like); C₁₋₁₀ alkyl phosphonic acid mono C₆-₁₀ aryl esters such as methylphosphonic acid monophenyl ester; C₆-₁₀ aryl phosphonic acid C₁₋₆ alkyl esters such as phenylphosphonic acid monomethyl ester; C₆-₁₀ aryl phosphonic acid mono C₆-₁₀ aryl esters such as phenylphosphonic acid monophenyl ester, and the like. The above-mentioned phosphonic acid esters may be cyclic phosphonic acid esters (9,10-dihydro-10-hydroxy-10-oxo-9-oxa-10-phosphaphenanthren e and the like).

The organic phosphinic acids include organic phosphinic acids in which organic group(s) (hydrocarbon groups such as aliphatic hydrocarbon groups, alicyclic hydrocarbon groups and aromatic hydrocarbon groups) is/are bonded to the phosphorus atom of phosphonic acid. Such organic phosphinic acids include substituted phosphinic acids corresponding to the above-mentioned substituted phosphonic acids, such as mono or di-C₁₋₁₀ alkyl phosphinic acids such as methylethylphosphinic acid and diethylphosphinic acid; C₁₋₁₀ alkyl C₆-₁₀ aryl phosphinic acids such as methylphenylphosphinic acid; C₆-₁₀ aryl phosphinic acids such as phenylphosphinic acid; phosphinicocarboxylic acids [phosphinico di-C₁₋₆ aliphatic carboxylic acids such as phosphinicodiacetic acid; C₁₋₆ alkylphosphinico-mono C₁₋₆ aliphatic carboxylic acids such as 3-(methylphosphinico) propionic acid, C₆-₁₀ aryl phosphinico-mono C₁₋₆ aliphatic carboxylic acids such as 3- (phenylphosphinico) propionic acid, carboxylic acid esters of these phosphinicocarboxylic acids, and the like; phosphinico mono- or di-C₆₋₁₀ aryl carboxylic acids or carboxylic acid esters thereof]; hydroxyphosphine oxides (1-hydroxydihydrophosphonyl oxides, 1-hydroxyphosphorane oxides and the like), and the like.

The above-mentioned organic phosphoric acid salts can form salt(s) with the nitrogen-containing cyclic compound having amino group(s) at a part of all of the sites that are capable of forming a salt, and any salt can be used. Such organic phosphoric acid salts include salts of amino group-containing triazine compounds such as melamine salts of organic phosphoric acid esters (pentaerythritol bisphosphate-melamine, pentaerythritol bisphosphate-dimelamine and the like), melamine salts of C₁₋₆ alkyl-substituted phosphonic acids, melamine salts of mono or diphosphonic acid esters of C₁₋₆ aliphatic diols (1-hydroxyethylidene-1,1-diphosphonic acid-dimelamine, 1-hydroxyethylidene-1,1-diphosphonic acid-tetramelamine and the like), melamine salts of phosphonic acids substituted with aliphatic polyvalent group(s) having hetero atom(s) [nitrilotris(methylenephosphonic acid)-tetramelamine salt, nitrilotris(methylenephosphonic acid) -hexamelamine salt and the like], and C₆₋₁₀ aryl phosphonic acid-melamines (phenylphosphonic acid-melamine, phenylphosphonic acid-dimelamine and the like), phosphinico carboxylic acid-melamine salts [aryl phosphinico carboxylic acid-melamine salts such as 3-(phenylphosphinico) propionic acid-melamine and 3-(phenylphosphinico) propionic acid-dimelamine]; melem salts, melam salts, melon salts and guanamine salts corresponding to the above-mentioned melamine salts; and double salts corresponding to the above-mentioned melamine salts such as pentaerythritol bisphosphate-melamine-melem, and the like. Furthermore, triazole salts corresponding to the above-mentioned triazine compound salts can also be used. Such organic phosphoric acid salts can be used singly or in combination of two or more kinds.

The method for producing such organic phosphoric acid salt of a nitrogen-containing compound having amino group(s) (especially an amino group-containing triazine compound) is not especially limited, and the organic phosphoric acid salt can be produced by, for example, a method in which a solution or dispersion liquid (an aqueous solution or suspension liquid such as a water-acetone mixed system, a water-alcohol mixed system or the like) containing the above-mentioned nitrogen-containing compound and organic phosphoric acid is stirred and mixed at a suitable temperature (for example, at about 50 to 100 °C), and the produced precipitated product is separated and dried, or the like.

### (d) Melamine cyanuric acid

The melamine cyanuric acid includes those exemplified below, and can be used singly or in combination of two or more kinds. Furthermore, by using the melamine cyanuric acid in the present invention, generation of bleed out of the phosphazene compound can be suppressed the most efficiently.

The melamine cyanuric acid is an adduct of a melamine compound and cyanuric acid, isocyanuric acid or a derivative thereof (a salt of a melamine compound with cyanuric acid, isocyanuric acid or a derivative thereof), and the ratio (molar ratio) of the former to latter is not especially limited, and for example, the former / the latter = from 3/1 to 1/2, preferably from about 1 / 1 to 2 / 1.

The melamine compound include melamine or substituted melamines (alkylmelamines such as 2-methylmelamine, guanylmelamine and the like), melamine condensates (melam, melem, melon and the like), co-condensate resins of melamine (melamine-formaldehyde resins, phenol-melamine resins, benzoguanamine-melamine resins, aromatic polyamine-melamine resins and the like), guanamine or derivatives thereof (guanamine, methylguanamine, acetoguanamine, benzoguanamine, succinoguanamine, CTU-guanamine and the like) and the like. The cyanuric acid or a derivative thereof includes cyanuric acid, isocyanuric acid, ammeline, ammelide and the like.

As the melamine cyanuric acids, for example, melamine salts of cyanuric acid such as melamine cyanulate, and melam salts, melon salts, guanamine salts and the like corresponding to the melamine salts can be exemplified. The melamine cyanuric acids can be used singly or in combination of two or more kinds. Among these, melamine cyanulate is preferable.

The method for producing the melamine cyanuric acid is not especially limited, and a method in which a mixture of a melamine compound and cyanuric acid or a derivative thereof is prepared as an aqueous slurry, the aqueous slurry is sufficiently mixed to form a salt of the two compounds into microparticles, and the slurry is filtered and dried is preferable. The melamine compound, cyanuric acid, isocyanuric acid and the like may remain as some unreacted substances in the powdery compound obtained by this way.

The average particle size of the melamine cyanuric acid is from 0.01 to 100 µm, preferably from 0.1 to 70 µm, further preferably from about 1 to 50 µm. If the average particle size is too small, secondary flocculation easily occurs, and the dispersibility in the resin decreases, whereas if the average particle size is too large, the flame retardance decreases.

### [Alloy resin]

The flame-retardant PBT resin composition of the present invention may also be formed into an alloy resin by using other resins in combination besides the PBT resin as a base resin. By forming an alloy resin, generation of warpage is suppressed when the composition is formed into a molded product. Furthermore, although the flame-retardant PBT resin composition of the present invention can sufficiently exert bleed resistance without forming the resin into an alloy as mentioned above, it is needless to say that the bleed resistance is improved more by forming the resin composition into an alloy resin.

The resin that is used for forming the above-mentioned alloy resin includes polycarbonate resins, polyethylene telephthalate resins, polystyrene resins, polyphenylene oxide resins, polyamide resins, acrylonitrile-styrene copolymers, acrylonitrile-butadiene-styrene copolymers and the like, and among these, polycarbonate resins, polyethylene telephthalate resins and polyamide resins are preferable.

The resin other than the PBT resin which is used for forming an alloy resin is incorporated by preferably from 5 to 50 parts by mass, more preferably from 10 to 40 parts by mass with respect to 100 parts by mass of the PBT resin (A).

### [Other components]

The flame-retardant PBT resin composition of the present invention may contain other components as necessary. As the other components, inorganic fillers, dripping inhibitors, antioxidants such as hindered phenol, phosphorus-based secondary antioxidants,thioether-basedsecondary antioxidants, inorganic crystalline nucleating agents, mold release agents, colorants and the like can be incorporated. Among these, inorganic fillers and dripping inhibitors are explained below.

### (Inorganic fillers)

The inorganic fillers are used for the purpose of improving mechanical properties, and as specific examples, either of fibrous filler materials, powder and granular filler materials, plate-like filler materials and the like can be used. Examples of the fibrous filler materials include inorganic fibrous substances such as glass fibers, carbon fibers, silica fibers, alumina fibers, zirconia fibers, boron nitride fibers, silicon nitride fibers and potassium titanate fibers, as well as fibrous substances of metals such as stainless, aluminum, titanium, copper and brass. The powder and granular filler materials include silicic acid salts such as silica, quartz powders, glass beads, glass balloons, glass powders, calcium silicate, aluminum silicate, kaolin, talc, clay, diatomite and wollastonite, metal oxides such as iron oxide, titanium oxide, zinc oxide, antimony trioxide and alumina, metal carbonic acid salts such as calcium carbonate and magnesium carbonate, metal sulfuric acid salts such as calcium sulfate and barium sulfate, other ferrites, carbonized silicon, respective metal powders and the like. Furthermore, the plate-like filler materials include mica, glass flakes, various metal foils and the like. The inorganic filler materials can be used by singly one kind or in combination of two or more kinds.

### (Dripping inhibitors)

The dripping inhibitors are used for preventing dropping of the resin during combustion. Specific examples of the dripping inhibitors include fluorinated polyolefins such as polytetrafluoroethylene, tetrafluoroethylene/perfluoroalkyl vinyl ether copolymers, tetrafluoroethylene / hexafluoropropylene copolymers, tetrafluoroethylene / ethylene copolymers, vinylidene fluoride and polychlorotrifluoroethylene, and among these, polytetrafluoroethylene, tetrafluoroethylene/perfluoroalkyl vinylether copolymers, tetrafluoroethylene / hexafluoropropylene copolymers and tetrafluoroethylene / ethylene copolymers are preferably used.

The flame-retardant PBT resin composition of the present invention having the above-mentioned composition satisfies the conditions (1) a flame retardance in accordance with a UL94 flammability test of V-0, (2) a glow-wire ignition temperature (GWIT) of 775°C or more, and (3) a comparative tracking index (CTI) of 400 V or more. The respective conditions are explained below.

### (1) Flame retardance in accordance with a UL94 flammability test

This is an index for flame retardance with respect to a predetermined combustion test. Specifically, the combustion property is tested by using five reed-shaped test pieces (thickness 1.5 mm) in accordance with the method of the subject 94 (UL94) by Under Writers Laboratories, Inc., and evaluated at V-0, V-1, V-2 and HB in accordance with the evaluation method described in UL94. The flame retardance is the highest at V-0, and then decreases at V-1, V-2 and HB in this order. The present invention defines as V-0.

### (2) Glow-wire ignition temperature (GWIT)

This is a glow-wire ignition temperature (GWIT) in accordance with IEC60695-2-13 standard, and is specifically the maximum temperature at which no ignition is caused during pressing a glow-wire at a test temperature against a test piece for 30 ± 1 sec, and during the subsequent 30 sec. In the present invention, the glow-wire ignition temperature (GWIT) is defined as 775°C or more, preferably 800°C or more.

### (3) Comparative tracking index (CTI)

This is a comparative tracking index (CTI) in accordance with IEC60112 standard, and is specifically the maximum voltage at which tracking breaking does not occur in the case where a predetermined test liquid (a 0.1% aqueous ammonium chloride solution) is added dropwise in a state that a voltage is applied to the surface of a test piece. The comparative tracking index is, so to speak, an index showing difficulty of causing of tracking of an insulating substance. In the present invention, the comparative tracking index (CTI) is defined as 400 V or more, preferably 600 V or more.

The molded product of the present invention is formed by molding the above-mentioned flame-retardant PBT resin composition of the present invention. The method for forming a molded product using the flame-retardant PBT resin composition of the present invention is not especially limited, and a known method can be adopted. For example, the molded product can be prepared by putting the flame-retardant PBT resin composition of the present invention into an extruder, melt-kneading the composition to form pellets, putting the pellets into an injection molding machine equipped with a predetermined mold and conducting injection molding.

The molded product of the present invention is preferably formed into parts around power sources of a dishwasher, a refrigerator, a heater, an air-conditioner, a laundry machine, a microwave oven and an electrical tool, and the parts around power sources include a relay, a switch, a connector, an actuator and a sensor.

### Examples

The present invention will further be specifically explained below by Examples, but the present invention is not limited to the following Examples.

### [Examples 1 to 17, Comparative Examples 1 to 12]

In each of Examples/Comparative Examples, among a PBT resin, a phosphinic acid salt, a phosphazene compound, a nitrogen-containing cyclic compound, an alloy resin, a bromine-based flame retarder, a dripping inhibitor and an inorganic filler, the components and numbers of parts (parts by mass) shown in the following Table 1 and Table 2 were blended, and melt-kneaded by a biaxial extruder with a screw having a diameter of 30 mm (manufactured by the Japan Steel Works, Ltd.) at 260°C to obtain a pellet-like flame-retardant PBT resin composition.

The details of the above-mentioned respective components are as follows.
PBT resin: Duranex (registered trademark) manufactured by Wintech Polymer, inherent viscosity: 0.88 dL/g
Alloy resin (PC) : Panlite L-1225WP manufactured by Teij in Kasei
Alloy resin (PET): TRF manufactured by Teijin Fibers
Phosphinic acid salt: EXOLITE OP1240 manufactured by Clariant Japan
Phosphazene compound: Rabitle FP-110 manufactured by Fushimi Pharmaceutical Co., Ltd.
Nitrogen-containing cyclic compound (melamine cyanulate): MELUPUR MC50 manufactured by BASF Japan
Nitrogen-containing cyclic compound (melamine polyphosphate): PHOSMEL-200 manufactured by Nissan Chemical Industries, Ltd.
Bromine-based flame retarder: FR-1025 manufactured by ICL-IP
Dripping inhibitor: Fluon CD-076 manufactured by Asahi Glass Co., Ltd.
Inorganic filler: ECS03T-187, glass fiber manufactured by Nippon Electric Glass Co., Ltd.

Using the flame-retardant PBT resin composition of each of the Examples/Comparative Examples obtained as above, the following evaluations were conducted.

In either of Examples and Comparative Examples, bridging of the phosphinic acid salt did not generate, and the handling property was fine.

### (1) Flame retardance

In each of Examples / Comparative Examples, the combustion property was tested by using five test pieces (thickness 1.5 mm) obtained by using the obtained flame-retardant PBT resin composition in accordance with the method of the subj ect 94 (UL94) by Under Writers Laboratories, Inc., and evaluated at V-0, V-1, V-2 and HB in accordance with the evaluation method described in UL94. The flame retardance is fine at V-0, and then deteriorates at V-1, V-2 and HB in this order.

### (2) Glow-wire ignition temperature (GWIT) test

In each of Examples / Comparative Examples, test pieces for evaluation (a flat plate of 8 cm × 8 cm × thickness 3 mm, a flat plate of 8 cm × 8 cm × thickness 1.5 mm, and a flat plate of 6 cm × 6 cm × thickness 0.75 mm) were prepared from the obtained flame-retardant PBT resin composition, and the test pieces for evaluation were evaluated according to the test method as prescribed in IEC60695-2-13. Specifically, a glow-wire ignition temperature is defined as a temperature that is 25°C higher than the maximum temperature of a tip of a glow-wire having a predetermined shape (a nickel/chromium (80/20) wire having an outer diameter of 4 mm which has been formed into a loop shape) in the case where ignition does not occur or fire spread for 5 sec or more does not occur when the glow-wire is brought into contact with the test piece for 30 seconds. The temperature is shown in Table 1 and Table 2. For the frame retardant uses in this specification, GWIT of 775°C or more is required.

### (3) Tracking resistance test

In each of Examples / Comparative Examples, a test piece for evaluation (a flat plate of 8 cm × 8 cm × thickness 3 mm) was prepared from the obtained flame-retardant PBT resin composition, and an applied voltage (V) by which tracking generates on the test piece for evaluation was measured on the test piece by using a 0.1% aqueous ammonium chloride solution in accordance with IEC (International electrotechnical commission) 112, 3^{rd}edition to give a comparative tracking index. The result of the measurement is shown in Table 1 and Table 2.

### (4) Bleed resistance test

Test pieces for evaluation (a flat plate of 8 cm × 8 cm × thickness 3 mm) were prepared from the flame-retardant PBT resin composition obtained as above, and the exuding of the flame retarder was evaluated by visual observation for the test piece that had been left at 110°C for 20 hours, and the test piece that had been left at 140°C for 20 hours, respectively, in a gear oven manufactured by Toyo Seiki Seisaku-sho, Ltd. The evaluation criteria were ○: no exuding was found, Δ: slight exuding was found, and × : significant exuding was found. The evaluation results are shown in Table 1 and Table 2.

### (5) Tensile test

The flame-retardant PBT resin composition obtained as above was dried at 140°C for 3 hours, a test piece for evaluating tensile property as prescribed in ISO3167 was molded in an injection molding machine at a cylinder temperature of 260°C and a mold temperature of 80 °C, and a tensile strength was measured in accordance with ISO527-1, 2 (test piece thickness 4 mm). The measurement result is shown in Table 1 and Table 2.

### (6) Warpage

The flame-retardant PBT resin composition obtained as above was dried at 140°C for 3 hours, a test piece having a flat plate shape with a length of 120 mm, a width of 120 mm and a thickness of 2 mm was molded in an injection molding machine under conditions of a cylinder temperature of 260°C, a mold temperature of 60 °C, an injection pressure of 60 MPa, an injection velocity of 17 mm/s, an injection time of 10 seconds, a cooling time of 10 seconds, and a total molding cycle of 45 seconds, and a flatness was measured. The flatness was measured at 9 points shown in Fig. 1 by a CNC image measurement machine (manufactured by Mitsutoyo Corporation), and obtained from the difference of the heights of the highest point and the lowest point. The case where the warpage was 5 mm or less was evaluated as ○, the case where the warpage was from 5 to 8 mm was evaluated as Δ, and the case where the warpage was 8 mm or more was evaluated as ×. As a result, Example 3 was ×, and Examples 10 to 14 were ○.

### (7) MV retention rate after retention

The melt viscosity (MV) of the flame-retardant PBT resin composition obtained as above was measured in accordance with ISO11443 at a temperature of 260°C and a shear velocity of 1000 s⁻¹. The melt viscosity in the case where the cylinder retention time was 30 min was also measured under similar conditions, and the latter was divided by the former to obtain the MV retention rate (%) after the retention. The case where the MV retention rate after the retention was 80% or more was evaluated as ○, the case of 80 to 50% was evaluated as Δ, and the case of lower than 50% was evaluated as ×. As a result, Examples 3, 13 and 14 were ○, Examples 9 and 10 were Δ, and Examples 11 and 12 were X.

### (8) MD

The flame-retardant PBT resin composition obtained as above was dried at 140°C for 3 hours, ISO3167 tensile test pieces were continuously molded 2,000 times at a resin temperature of 260°C, a mold temperature of 80°C, an injection time of 15 sec and a cooling time of 15 sec, and the presence or absence of the adhesion of a mold deposit (MD) to the mold was visually observed. The case where the adhesion of MD was observed little was evaluated as ○, and the case where slight tarnishing was observed on the mold was evaluated as Δ. As a result, slight tarnishing was observed on the mold due to the adhesion of MD in Examples 3, 13 and 14, whereas the adhesion of MD was observed little in Examples 10 and 11.

**[Table 1]**

| | | Examples | | | | | | | | | | | | | | | | | Reference Example |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 1 |
| Base resin | PBT | 100 | 100 | 100 | 100 | 100 | 100 | 100 | 100 | 100 | 100 | 100 | 100 | 100 | 100 | 100 | 100 | 100 | 100 |
| Alloy resin | PC | - | - | - | - | - | - | - | - | 5 | 11 | 24 | 44 | - | - | - | - | - | - |
| | PET | - | - | - | - | - | - | - | - | - | - | - | - | 52 | 24 | - | - | - | - |
| Phosphinic acid salt | | 22 | 30 | 38 | 52 | 38 | 38 | 51 | 25 | 41 | 43 | 48 | 56 | 42 | 48 | 30 | 58 | 47 | 19 |
| Phosphazene | | 19 | 19 | 19 | 19 | 12 | 27 | 19 | 19 | 20 | 21 | 24 | 28 | 26 | 24 | 19 | 22 | 24 | 19 |
| Nitrogen-containing cyclic compound | Melamine cyanulate | 11 | 15 | 19 | 26 | 19 | 19 | 6 | 32 | 20 | 21 | 24 | 28 | 21 | 24 | - | 22 | 47 | 19 |
| | Melamine polyphosphate | - | - | - | - | - | - | - | - | - | - | - | - | - | - | 15 | - | - | - |
| Bromine-based flame-retardant | | - | - | - | - | - | - | - | - | - | - | - | - | - | - | - | - | - | 19 |
| Dripping inhibitor | | 0.5 | 0.5 | 0.5 | 0.6 | 0.5 | 0.5 | 0.5 | 0.5 | 0.5 | 0.5 | 0.6 | 0.7 | 0.7 | 0.6 | 0.5 | 0.6 | 0.6 | 0.5 |
| Inorganic filler | | 66 | 71 | 76 | 85 | 73 | 80 | 76 | 76 | 80 | 85 | 95 | 110 | 105 | 95 | 71 | 87 | 94 | 76 |
| Amount of phosphazene in composition (% by mass) | | 8.7 | 8.1 | 7.5 | 6.7 | 4.9 | 10.2 | 7.5 | 7.5 | 8.1 | 7.9 | 7.6 | 7.5 | 7.5 | 7.6 | 8.1 | 7.6 | 7.7 | 7.5 |
| Flame retardency | | V-0 | V-0 | V-0 | V-0 | V-0 | V-0 | V-0 | V-0 | V-0 | V-0 | V-0 | V-0 | V-0 | V-0 | V-0 | V-0 | V-0 | V-0 |
| GWiT (°C) | | 800 | 800 | 800 | 800 | 775 | 800 | 800 | 800 | 800 | 800 | 800 | 800 | 800 | 800 | 775 | 800 | 800 | 775 |
| CTI (V) | | 550 | 600 | 600 | 600 | 600 | 600 | 600 | 600 | 600 | 600 | 475 | 475 | 475 | 600 | 600 | 600 | 600 | 450 |
| Bleed | Treated at 110° C for 20 hours | ○ | ○ | ○ | ○ | ○ | ○ | ○ | ○ | ○ | ○ | ○ | ○ | ○ | ○ | ○ | ○ | ○ | ○ |
| | Treated at 140° C for 20 hours | ○ | ○ | ○ | ○ | ○ | ○ | ○ | ○ | ○ | ○ | ○ | ○ | ○ | ○ | Δ | ○ | ○ | ○ |
| Tensile strength (MPa) | | 96 | 93 | 89 | 83 | 92 | 81 | 90 | 84 | - | - | 91 | - | 102 | 102 - | 92 | 77 | 71 | 110 |
| Warping | | - | - | × | - | - | - | - | - | Δ | ○ | ○ | ○ | ○ | ○ | - | - | - | - |
| Retention MV (MV retention rate) | | - | - | ○ | - | - | - | - | - | Δ | Δ | × | × | ○ | ○ | - | - | - | - |
| MD (visual observation after 2,000 shots) | | - | - | Δ | - | - | - | - | - | - | ○ | ○ | - | Δ | Δ | - | - | - | - |

**[Table 2]**

| | | Comparative Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Base resin | PBT | 100 | 100 | 100 | 100 | 100 | 100 | 100 | 100 | 100 | 100 | 100 | 100 |
| Alloy resin | PC | - | - | - | - | - | - | - | - | - | - | - | - |
| | PET | - | - | - | - | - | - | - | - | - | - | - | - |
| Phosphinic acid salt | | - | - | 32 | 32 | - | 34 | 10 | 34 | 56 | - | 15 | 15 |
| Phosphazene | | - | 27 | 16 | - | 16 | 4 | 16 | 17 | 75 | 19 | 0.6 | 0.6 |
| Nitrogen-containing cyclic compound | Melamine cyanulate | - | - | - | 16 | 32 | 17 | 16 | 4 | 28 | 19 | 6 | 6 |
| | Melamine polyphosphate | - | - | - | - | - | - | - | - | - | - | - | - |
| Bromine-based flame-retardant | | - | - | - | - | - | - | - | - | - | 38 | - | - |
| Dripping inhibitor | | - | - | 0.4 | 0.4 | 0.4 | 0.5 | 0.4 | 0.5 | 0.8 | 0.5 | - | - |
| Inorganic filler | | 43 | 55 | 64 | 64 | 64 | 67 | 60 | 67 | 112 | 76 | - | 52 |
| Amount of phosphazene in composition (% by mass) | | 0.0 | 15.1 | 7.5 | 0.0 | 7.5 | 1.8 | 7.9 | 7.6 | 20.2 | 7.5 | 7.5 | 7.5 |
| Flame retardency | | HB | HB | V-1 | V-0 | HB | V-0 | V-2 | V-2 | V-0 | V-0 | V-2 | V-2 |
| GW1T (°C) | | 725 | 800 | 775 | 750 | 775 | 750 | 800 | 775 | 825 | 750 | 750 | 750 |
| CTI (V) | | 350 | 325 | 550 | 600 | 600 | 600 | 500 | 500 | 600 | <300 | 600 | <300 |
| Bleed | Treated at 110° C for 20 hours | ○ | × | × | ○ | ○ | ○ | ○ | Δ | × | ○ | ○ | ○ |
| | Treated at 140° C for 20 hours | ○ | × | × | ○ | ○ | ○ | ○ | Δ | × | ○ | ○ | ○ |
| Tensile strength (MPa) | | 140 | 99 | 106 | 101 | 102 | 98 | 111 | 101 | 62 | 130 | - | - |
| Warping | | - | - | - | - | - | - | - | - | - | - | - | - |
| Retention MV (MV retention rate) | | - | - | - | - | - | - | - | - | - | - | - | - |

From Table 1 and Table 2, it is understood that, fine results are obtained in all of the evaluation items despite single use of the PBT resin in Examples 1 to 17 (except for Examples 9 to 14). In response to this, although the PBT resin was used singly in Comparative Examples 1 to 12, fine results were not obtained in at least one evaluation. Furthermore, Examples 9 to 14 are resins formed into alloys, and it is understood that these resins were excellent in bleed resistance as a matter of course, and that warpage was able to be decreased.

On the other hand, Reference Example 1 is an example in which the half of the phosphinic acid salt in Example 3 has been replaced with a bromine-based flame retarder, and Comparative Example 10 is an example in which the whole part of the phosphinic acid salt in Example 3 has been replaced with a bromine-based flame retarder, and it is understood from the comparison of these examples that it is possible to use a bromine-based flame retarder in combination, but the tracking resistance becomes poor when the amount exceeds a certain amount. Furthermore, if the bromine-based flame retarder is used in combination, then the requirement of non-halogenation cannot be satisfied.

In addition, in Examples 13 and 14, which are PET alloys, a tendency that a longer time was required for solidification until a sufficient mold release property was obtained and the molding cycle became longer as compared to those in other

Examples.

## Claims

1. A flame-retardant polybutylene telephthalate resin composition containing (A) a polybutylene telephthalate resin, (B) a phosphinic acid salt, (C) a phosphazene compound, and (D) a nitrogen-containing cyclic compound, which exhibits a flame retardance in accordance with a UL94 flammability test of V-0, a glow-wire ignition temperature (GWIT) in accordance with IEC60695-2-13 standard of 775°C or more, and a comparative tracking index (CTI) in accordance with IEC60112 standard of 400 V or more, and bleed out does not occur when the composition is treated at 110°C for 20 hours.

2. The flame-retardant polybutylene telephthalate resin composition according to claim 1, which contains the phosphazene compound (C) by 4% by mass or more and 20% by mass or less.

3. The flame-retardant polybutylene telephthalate resin composition according to claim 1 or 2, which contains the phosphinic acid salt (B) by 20 to 60 parts by mass, the phosphazene compound (C) by 10 to 60 parts by mass, and the nitrogen-containing cyclic compound (D) by 5 to 45 parts by mass, with respect to 100 parts by mass of the polybutylene telephthalate resin (A).

4. The flame-retardant polybutylene telephthalate resin composition according to any one of claims 1 to 3, wherein bleed out does not occur when the composition is treated at 140°C for 20 hours.

5. The flame-retardant polybutylene telephthalate resin composition according to any one of claims 1 to 4, wherein the nitrogen-containing cyclic compound (D) is a melamine cyanuric acid.

6. The flame-retardant polybutylene telephthalate resin composition according to any one of claims 1 to 5, which exhibits a comparative tracking index (CTI) of 600 V or more.

7. A molded product, which is formed by molding the flame-retardant polybutylene telephthalate resin composition according to any one of claims 1 to 6, and which directly supports connection parts in which a rated current of greater than 0.2 A flows, or which is used at a distance within 3 mm from these connection parts.

8. The molded product according to claim 7, wherein the molded product is a part around a power source of a dishwasher, a refrigerator, a heater, an air-conditioner, a laundry machine, a microwave oven or an electrical tool.

9. The molded product according to claim 8, wherein the part around a power source is a relay, a switch, a connector, an actuator or a sensor.
